# EUROPEAN PATENT APPLICATION

(11) **EP 3 203 767 A1**
(43) Date of publication of application: **09.08.2017**
(21) Application number: 16000256.4
(22) Date of filing: 02.02.2016
(51) Int. Cl.: H04W 12/04, H04W 84/12, H04W 8/20

(54) **METHOD FOR PROVIDING A MOBILE DEVICE WITH A SUBSCRIPTION**

(71) Applicant: Giesecke & Devrient GmbH, 81677 München (DE)
(72) Inventor: TEA, Vui Huang, 12061 Stockholm (SE)

(57) **Abstract**

The present invention relates to a method for providing a mobile device, in particular a secure element, with a subscription, comprising inputting a code into a mobile device, extracting information from the code, accessing a wireless network with the mobile device, forwarding the mobile device to a subscription management portal, wherein the subscription management portal is provided with technical means for a user to be able to download at least one subscription, downloading the subscription to the mobile device, and executing the subscription on the mobile device.

## Description

### Technical field

The present invention relates to a method for providing a mobile device, in particular a secure element of a mobile device, with a subscription. A subscription can be used to determine the relationship between the user of the mobile device and the mobile network operator. In particular, in order to determine the types of services that the user may obtain from the mobile network operator, for instance, the data connection type (GPRS, LTE, 5G, etc.).

### Background of the invention

Different mobile network operators offer different subscriptions. Accordingly, it is possible for a user to choose from a variety of subscriptions. According to varying needs, a user may want to adapt/change his subscription from time to time. In order to convince a user to change the subscription, one of the key selling arguments is off-device subscription provisioning, i.e. the provisioning of a subscription to the user without the user having to manually replace the SIM-card of the mobile device.

One of the key elements is the use of downloadable subscriptions instead of a permanent subscription on a removable SIM-card. A downloadable subscription is downloaded to the mobile device, in particular the secure element of a mobile device, and executed on the mobile device, in particular the secure element of a mobile device.

However, downloading a subscription to the mobile device requires the device to be "online", e.g. having a data connection, for instance a connection to the internet. A mobile device abroad may not - or only at high costs- be able to connect to the internet using its mobile connectivity (LTE; 5G). A new mobile device without a subscription is not able to use mobile date at all. Accordingly, it is difficult for such devices to download a "new" subscription.

Current solutions for downloading a subscription require at least one possibility for the mobile device to able to download data. One possible way forward in this regard are Wi-Fi- or WLAN-connections - either free of charge or paid. However, these connections suffer from the drawback that setting up a Wi-Fi-connection can be cumbersome. In addition, once the user has set up the connection, he has to manually switch to a portal or a webpage from which he can choose at least one subscription for download. These steps may impede a user from acquiring/ downloading a new subscription.

### Summary of the invention

It is an object of the invention to provide a method for providing a mobile device, in particular a secure element of a mobile device, with a subscription, wherein the invention shall overcome the drawbacks resulting from the state of the art and shall further be able to facilitate and secure the provisioning of a subscription to a user.

The objection of the invention is accomplished with a method according to independent claim 1. Preferred embodiments are disclosed in the dependent claims.

The inventive concept is based on the idea to provide the user with means to facilitate the download of a subscription to a mobile device in order to further support a user when downloading a subscription.

In this regard, a method for providing a mobile device, in particular a secure element, with a subscription, comprises inputting a code into a mobile device, extracting information from the code, wherein the information at least comprises executable instructions on the mobile device in order for the mobile device to be able to access a wireless network, in particular a nearby wireless network, accessing the wireless network with the mobile device, forwarding the mobile device, in particular a browsing means on the mobile device, to a subscription management portal, wherein the subscription management portal is provided with technical means for a user to be able to download at least one subscription, downloading the subscription to the mobile device, executing the subscription on the mobile device.

A "code" according to the invention can be any code containing information or data, for instance, a QR-code or a code transmitted via NFC. Such a code can be inputted into the mobile device using a camera device of the mobile device and/or a NFC-reading device of a mobile device.

The information in the code can be extracted using standard decoding means. Preferably, the code is encrypted.

A mobile subscription defines the relationship between a MNO (mobile network operator) and a user of the mobile device. For instance, a subscription enables a user to carry out phone calls and/or to use a data connection to download content from the internet. The subscription also defines the payment method, i.e. prepaid or postpaid. A subscription used to be fixedly mated with a removable SIM-card. Nowadays it is possible to change and/or update a subscription without removing the SIM-card, in particular a subscription may be implemented on a SIM-card, an embedded SIM (eUICC) and/or integrated SIM (iUICC).

A "subscription management portal" - in the sense of the invention - can be, for instance, a web page on which a user is able to view, analyze and/or compare at least one, preferable a plurality of subscriptions. The subscriptions in the portal may be provided by only one MNO (mobile network operator) or by a plurality of MNOs, wherein one MNO may offer one or a plurality of subscriptions.

The invention offers the advantage that - when downloading a subscription to a mobile device - it is not necessary anymore to go through the tedious procedure of connecting to a mobile network and afterwards manually going to the subscription management portal; either by manually inputting the web-address of the subscription management portal or by inputting another code. Instead, a user has to input the code only once into the mobile device. This reduces the hurdle for a user when attempting to change his subscription, since he is automatically forwarded to the subscription management portal. Moreover, the provider of the subscription management portal may on the one hand offer the connection to the wireless network free of charge and on the other hand restrict the connectivity of the wireless network to the subscription management portal only.

The wireless network - according to an embodiment of the invention - may be a wifi-network (WLAN) and/or a Bluetooth^{®}-network. These networks construe known networks with good data transfer rates. Accordingly, it is possible to quickly and reliably transfer the subscription (data).

According to a preferred embodiment of the invention, prior to accessing the wireless network, a wireless connection means is activated on the mobile device. In this regard, it is advantageously possible to only activate the wireless connection means when necessary. Thus, it is on the one hand advantageously possible to reduce the energy consumption of the mobile device and on the other hand it is advantageously possible to reduce the security risk for the mobile device having an unused, activated wireless connection means.

According to another preferred embodiment of the invention, the wireless network is a network which is adapted to automatically forward the user to the subscription download portal. Thus, once the user, i.e. the mobile device, is connected to the wireless network, a forwarding mechanism is provided that will automatically redirect the browser of the mobile device to the subscription download portal.

According to yet another embodiment, the code is provided as an optically readable code, in particular a QR-code, and/ or as a code stored in a memory of a NFC-tag. In this regard the code may be inputted using a camera device of the mobile device, a NFC-tag-reading device of the mobile device and/ or manually. With such a solution it is in an easy and quick manner possible to download a subscription to the mobile phone.

In addition, a background means may be provided to determine whether the mobile device uses the Wi-Fi access code for the first time or whether the mobile device has been using the code at least twice or more often. The Wi-Fi account can be a one-time account, or a pre-contracted account that is bandwidth-restricted and IP-restricted. For example, this may be a relatively low-speed 1 Mbit/ s connection that can only be used to access certain web pages, in particular the subscription management portal. It can also be a unique session ID connected to an identifier of the mobile device and/ or the secure element, for instance an IMSI (International Mobile Subscriber Identity) or the IMEI; hence the Wi-Fi account can be disabled or cancelled once the subscription download with the unique session ID is completed successfully.

In addition, a background means may be provided to determine whether the mobile device uses the code for the first time or whether the mobile device has been using the code at least twice or more often. This can be achieved, for instance, by registering the IMEI (International Mobile Equipment Identity) of a mobile device using the code in the background means. Thus, the background means can check whether the IMEI of a device reading the code has already been used or not whenever the code is being read. In other words, whenever the mobile device is being forwarded to the subscription management portal, the IMEI of this device is registered in the background means. If the mobile device is forwarded to the subscription management portal again using the same code, the background system notices this circumstance and may decline access to the subscription management portal.

According to a further preferred embodiment, the mobile device and/or a secure element in the mobile device may not be provided with a subscription prior to the download of the subscription. Accordingly, it is efficiently possible to provide the mobile device with a subscription. This is beneficial, whenever the device is used for the first time, in particular, whenever the device is used for the first time while the owner is abroad.

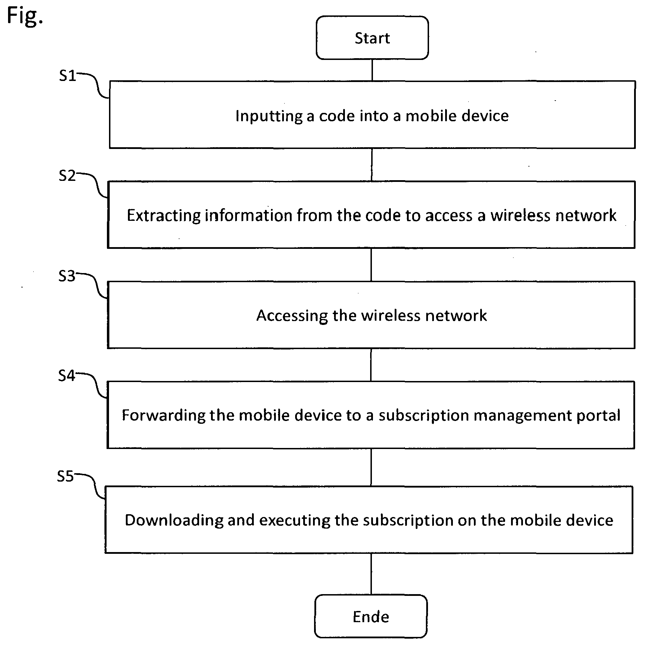

### Brief description of the drawing

The Figure shows a block diagram comprising the main steps of a method according to the invention.

### Best mode for carrying out the invention

In the following an exemplary embodiment of the invention will be described with reference to the drawing.

A mobile device, in particular a mobile phone, a tablet PC and/or a wearable device, is a widely spread companion in today's everyday life. In order to function best, a mobile device is usually provided with a subscription. The subscription defines the relationship between the subscriber - usually the owner of the mobile device - and the MNO. For instance, the subscription defines the payment method, usually either prepaid or postpaid. In addition the subscription may define the connectivity method for data connections (LTE, 5G, etc.) and/or what type of calls, for instance national calls or international calls, the subscriber is allowed to make.

A subscriber may change his subscription by downloading a subscription from an online, browser-based subscription management portal. The new subscription is downloaded to a secure element, in particular a SIM-card, an embedded SIM-card (eUICC), an integrated SIM-card (iUICC) etc., and executed on the mobile device, in particular the secure element.

In order to download a subscription, a user/subscriber needs to be provided with online connectivity. A user being abroad or a user having purchased a new phone is not necessarily "online", since the phone's subscription might not provide service abroad or the phone is simply not provided with a subscription yet. Even if the phone has "online connectivity", the transfer of data using online connectivity might be more expensive.

Accordingly, in order to promote the downloading of new subscriptions, MNOs and other providers have realized that a wifi-connection, makes it easier for a user to download a new subscription and thus lowers the burden for the user whenever he decides to install a new subscription. However, a wifi-connection requires a setup of the connection by connecting to the wifi and afterwards the typing in of credentials. In addition, the setup may also require defining a payment method for the wifi-connection.

In order to facilitate the setup at conventional locations, at which a wifi-connection is available (also called hot-spots), a QR-code may be available, for instance in the form of a sticker or a tag. In order to connect, the user of a mobile phone scans the QR-code with the camera device of the mobile phone. Afterwards the mobile phone extracts information from the code which allows the phone to enter/ access the wireless network.

However, this method suffers from the drawback that the user - in order to proceed to downloading a subscription - has manually to go to a webpage of a subscription management portal. Alternatively, the user has to scan a second QR-code which redirects him to the webpage of the subscription management portal. Such a procedure is tedious and might impede the user from downloading a subscription.

Instead of a QR-code, an NFC-tag might also be used in an analogous way.

According to the invention, the code, in particular the code encoded in a QR-code or an NFC-tag, does not only comprise instructions for the mobile device in order to be able to access a wireless network, in particular a wifi-network, but also advantageously forwards the mobile device, in particular a browsing means of the mobile device, to a subscription management portal. This inventive method offers the advantage that it is by beneficially employing technical means significantly more convenient for a user of a mobile device to switch a subscription.

Thus, in a first step S1, the user has to input a code into a mobile device. This can be achieved, for instance, by scanning a QR-code with a camera device of the mobile device or by reading a NFC-tag with a NFC-tag reading means of the mobile device.

The code comprises information, wherein the information which may be in the format of decrypted data comprises executable instructions which may be executed on the mobile device. These executable instructions enable the mobile phone to access a wireless network, in particular a nearby/shortrange (<300m) wireless network (step S2).

In a next step, the mobile device gains access to the wireless network (step S3). Gaining access to a wireless network is a known, conventional procedure. Accordingly, no further explanation shall be given in the context of this application. The Wi-Fi account can be a one-time account, or a pre-contracted account that is bandwidth-restricted and IP-restricted. For example, this may be a relatively low-speed 1 Mbit/s connection that can only be used to access certain web pages, in particular the subscription management portal. It can also be a unique session ID connected to an identifier of the mobile device and/or the secure element, for instance an IMSI (International Mobile Subscriber Identity); hence the Wi-Fi account can be disabled or cancelled once the subscription download with the unique session ID is completed successfully.

In a next step S4, the mobile device is forwarded to a subscription management portal. This can be achieved by running a series of instructions on the mobile device that are adapted to open a browser and/or a browsing application on the mobile device and that redirect/forward the browser to a webpage or the like comprising a subscription management portal. In this subscription management portal it is possible to choose a subscription from a plurality of subscriptions. As an equivalent alternative to the browser, an application comprising a subscription management portal could be opened on the mobile device.

The plurality of subscriptions may be provided in the subscription management portal by a single MNO or a plurality of MNOs may provide at least one subscription in the subscription management portal. The user may choose the preferred subscription in the subscription management portal, for instance a subscription providing a good coverage and bandwith regarding data transmission (e.g. 5G) or a subscription offering special rates for long distance calls.

Once, the user has determined the preferred subscription, the subscription is downloaded (step S5) to the mobile device. After a restart of the mobile device and/or the secure element, the new subscription may be executed on the mobile device.

The wireless network may be a wifi-network (also referred to as WLAN-network), a Bluetooth-network, a zigbee-network, etc. Prior to accessing the wireless network, a wireless connection means on the mobile phone shall be activated.

In step S4, the redirecting/forwarding can be implemented as follows. The code may comprise information regarding a redirection parameter to the URL of the subscription management portal and a predetermined password and/ or a one-time password. The redirection parameter will automatically redirect the browser of the mobile device to the subscription management portal.

For instance, a modified URL could have the following format: https://captiveportal/target=https%3A%2F%2Fsubman2.gide.com%2Fmno portal % 2Foffdevice-select%3FeID%3D111%26primaryDpf%3D222%26currentDpf%3D2%26push Status%3D2?username=SubMan&password=temp123

In order to avoid that the same mobile device uses the same code for a plurality of times, the mobile device may be required to transmit its IMEI (International Mobile Station Equipment Identity) to the subscription management server, when accessing the wireless network.

The subscription management server may then compare the IMEI with a list of already known/used IMEIs. Only if the IMEI is not known, i.e. the IMEI is "new" to the subscription management server, the subscription management server will allow the mobile device access to the network and/ or to the subscription management server. As an alternative, the IMSI could be used.

## Claims

1. Method for providing a mobile device, in particular a secure element, with a subscription, the method comprising:
- inputting a code into a mobile device;
- extracting information from the code, wherein the information at least comprises executable instructions on the mobile device in order for the mobile device to be able to access a wireless network, in particular a nearby wireless network;
- accessing the wireless network with the mobile device;
- forwarding the mobile device, in particular a browsing means on the mobile device, to a subscription management portal, wherein the subscription management portal is provided with technical means for a user to be able to download at least one subscription.
- downloading the subscription to the mobile device, and
- executing the subscription on the mobile device.

2. Method according to claim 1, wherein the user is able, in the subscription management portal, to choose from a plurality of subscriptions.

3. Method according to claim 1 or 2, wherein the wireless network is a wifi-network and/or a Bluetooth®-network.

4. Method according to claim 3, wherein prior to accessing the wireless network, a wireless connection means is activated on the mobile device.

5. Method according to claim 3 or 4, wherein the information comprises instructions to activate the wireless connection means on the mobile device.

6. Method according to one of the preceding claims, wherein the wireless network is a network which is adapted to automatically forward the mobile device to the subscription download portal.

7. Method according to one of the preceding claims, wherein the code is provided as an optically readable code, in particular a QR-code, and/or as a code stored in an NFC-tag, and
wherein the code is inputted using a camera device of the mobile device and/or a NFC-reading device of the mobile device.

8. Method according to one of the preceding claims, wherein a background means is provided, wherein the background means is adapted to determine whether the code is being used for the second time with the mobile device.

9. Method according to one of the preceding claims, wherein the mobile device and/or a secure element in the mobile device is not provided with a subscription prior to the download of the subscription.
